# EUROPEAN PATENT APPLICATION

(11) **EP 2 284 792 A1**
(43) Date of publication of application: **16.02.2011**
(21) Application number: 09167429.1
(22) Date of filing: 07.08.2009
(51) Int. Cl.: G06T 1/20, G06F 9/46

(54) **Framework and execution module for use in the same**

(71) Applicant: IMEC, 3001 Leuven (BE)
(72) Inventor: The designation of the inventor has not yet been filed
(74) Representative: D'Halleweyn, Nele Veerle Trees Gertrudis

(57) **Abstract**

The present invention is related to a framework for the development of a software application. It further relates to an execution module for use in such a framework.

According to the invention, the framework comprises an execution module for managing a function call to a first API functional unit during run-time of the software program. The first API operates on data which is expected to be arranged in accordance with a predefined data structure. According to the invention, the execution module comprises a type converter for automatically converting the input data to match said predefined data structure when the first API functional unit is called by said function call during run-time.

## Description

The present invention is related to a framework for the development of a software application. It further relates to an execution module for use in such a framework.

In recent years, graphical processing units (GPUs) have seen a strong development. Strongly driven by the increasing demand for graphical computing power, GPUs have become processing cores which can compete with or even surpass the central processing unit (CPU) for many dedicated tasks.

Some vendors of GPUs have started software and hardware developments which allow programmers to utilize the computing power offered by the GPU for general processing (GPGPU). To that end, the GPU itself must support this new functionality. An example of GPGPU is CUDA from Nvidia. Apart from the aspect of general processing, GPUs were already equipped with hardware implemented functionality to accelerate the graphics pipeline. This functionality was exposed to software developers in the form of an application programming interface (API) such as DirectX from Microsoft or OpenGL from the Khronos group.

Typically, a software developer wants to realize a given functionality in a program. Presently, a user selects a programming language which offers the necessary tools or libraries. If the user needs access to the functionality offered by the GPU, he must make sure that the API supports the selected programming language. Hence, the software developer is limited in choice for a programming language.

Another important aspect is that a software developer may want to use the functionality of different APIs within one program. For instance, a programmer may want to combine DirectX and CUDA. Some functionality of the APIs involves operating on data arranged in a buffer which has a predefined data structure. Unfortunately, this data structure may differ between APIs.

It is therefore an object of the present invention to provide a solution which enables a software developer to more easily develop programs which use functionality of different APIs, wherein the different APIs may relate to different processing units (GPU/CPU).

According to a first aspect of the invention, this object is achieved with a framework for the development of a software program which comprises an execution module for managing a function call (FC) to a first API functional unit (AFU1) during run-time of the software program, wherein AFU1 is comprised by a first application programming interface (API1) and is provided with an input accepting input data placed in a buffer. AFU1 can be called by the function call from within the software program and AFU1 is arranged to work with a predefined data structure of the data in the buffer. The execution module comprises a type converter (ATC) for automatically converting the input data to match the predefined data structure when AFU1 is called by the function call during run-time.

According to the invention, the conversion between different data structures is performed by the ATC residing in the execution module. The ATC is automatically activated whenever a function call is detected. Consequently, the developer need not worry about incompatibility between different data structures expected by different AFUs. The execution module can be considered as an added layer in between the software program and the processing core.

In an advantageous embodiment, the framework is adapted to be executed on an application virtual machine (AVM). Here, the AVM is arranged for executing code that has been compiled by a compiler into a common language from at least one of a plurality of languages supported by the compiler and the AVM. Furthermore, the software program is in a supported language, and the framework is available for each of the plurality of supported languages.

A function call within the software program, which typically is made available through a library, is compiled into the common language. Upon execution by the application virtual machine and under management of the execution module, AFU1 is called. Because both the software program and API1 are supported by the common language, not only the function call can be directed to AFU1 upon execution but also a pointer to the input data. Hence, AFU1 is able to operate on the input data. Moreover, this data is converted according to the predefined data structure by the ATC. As such, a software developer need not worry whether his data is organized according to the predefined data structure dictated by AFU1.

It should be noted that the core of API1 can be written in a language which is not supported by the AVM. In that case, the API is provided with a wrapper to enable the functional units in the API to be called from within a supported language. In any case, the API should be accessible from within the software program.

The buffer may be coupled to an allocated region of a memory of a computer. In case of an AVM, this buffer is accessible by the compiled code in the common language. A buffer may be accessible directly, wherein individual content, e.g. bytes, of the buffer can be accessed individually, or it may be accessible indirectly, for instance when the buffer does not reside in the main memory of a computer but in the memory of the GPU. As an example, one could consider a DirectX function, e.g. AFU1, requiring input data regarding the RGB values for a 1024 x 768 image. This data is organized in a buffer residing in the main memory of the computer. Next, a CUDA functional unit is called which should also operate on this same data. First, the data itself has to be re-organized by the ATC. Additionally, the data may be moved or copied or a pointer to the data in the main memory can be passed onto the CUDA functional unit.

Examples of a data structure are the type and location of the data in the buffer. For instance, data pertaining to the 1024 x 768 image could consist of 3 subsequent color fields, each color field comprising 1 byte to indicate the color component, e.g. R(ed), G(reen) or B(lue) for a specific pixel in the image. Other APIs may expect data to be organized in a different fashion, for instance an arrangement in which for each pixel the red, green, and blue color components are given.

The type converter may be adapted to either re-arrange the data already in the buffer, or to re-arrange the data prior to placing the re-arranged data in the buffer.

AFU1 may be provided with an output for outputting data operated on by AFU1 in a buffer. The software program may further comprise a function call to a second API functional unit (AFU2) which is comprised by a second application programming interface (API2). AFU2 may have an input accepting data placed in a buffer. Similar to AFU1, AFU2 is arranged to work with a predefined data structure of the data in the buffer. In this case, the ATC is further arranged to convert the data in the output buffer of AFU1 to match the data structure of the input buffer of AFU2.

AFU1 accepts data at its input and outputs data at its output. This data is arranged in an input buffer and an output buffer and must be arranged in accordance with a predefined data structure.

The input buffer and output buffer of AFU1 may be coupled to different allocated regions of a memory of a computer. Additionally or alternatively, the predefined data structure of the input and output buffer of AFU1 may be different.

The ATC may be arranged to convert data in the output buffer of AFU1 to match the data structure of the input buffer of AFU2. This allows serial or cascaded operation of AFU1 and AFU2. Again, the software developer need not worry about any different data structure which may apply for the various functional units.

The ATC may comprise a first and second intermediate converter. Here, the first intermediate converter is arranged to convert data to match a predefined generic data structure. The second intermediate converter is arranged to convert and or re-arrange data according to the predefined generic data structure to match any of the predefined data structures of the input and or output buffer.

Using a generic buffer reduces the efforts of constructing the type converter. When a new API must be supported by the type converter, it is normally required to implement conversion between any of the existing predefined data structures to the data structure of the new API. By using intermediate converters, one only needs to implement the conversion between the new data structure and the generic data structure.

The output of the first intermediate converter may be stored in a separate buffer, not being an input or output of an AFU.

It is convenient if the execution module is part of a common library accessible from within the software program. If an AVM is used, the common library could be made accessible to each of the plurality of supported languages.

The ATC can be arranged to first detect the data structure of the input and or output buffer of AFU1 and or AFU2, and to then convert the data in accordance with the detected data structure.

The first and second APIs may be application programming interfaces for a graphical processing unit (GPU).

The framework can be based on the .NET framework. APIs in this framework can be one of the group consisting of CUDA.NET, OpenCV, DirectX, CUDA, CUDA.NET, Emgu.CV, and SlimDX.

The software program may comprise a first and second function call which have identical functionality but which invoke a different API functional unit. In this case, the execution module can be arranged to switch between the first and second function call during run-time in accordance with predefined rules or determined performance statistics.

As an example, consider a software program written in a supported language. Prior to compiling into the common language, the software program may comprise the first function call for implementing a desired functionality offered by a given API. Similarly, a second function call could have been used that offers a similar functionality though by means of a different API. Both APIs require data to be organized differently. The execution module is arranged to switch between these function calls during run-time in accordance with predefined rules or determined performance statistics. This is made possible by the ATC which allows the interchangeability of function calls. In case of a common language, the switching could involve the actual replacement of code pertaining to the function call at the level of the common language. Also in this case, this is made possible by the execution module which operates as a management layer in between the software program in the supported language and the AVM.

Changing between function calls during run-time, allows optimization of the process flow. For instance, it may be determined that a certain resource, such as a GPU, is heavily loaded, or it may be determined that a given implementation of a FU is faster. Based on this information, the execution module may switch between implementations.

Another approach is to use a generic function call associated with a plurality of implementations, e.g. a function call FC1_1 invoking AFU1_1 and a function call FC1_2 invoking AFU1_2. Here, AFU1_1 and AFU1_2 are functionally interchangeable. Especially, when use is made of the generic buffer type, a software program can be constructed using generic function calls. It can then be left up to the execution module to choose for an actual implementation (FC1_1 or FC1_2) based on predefined rules or performance statistics.

Next, the present invention will be described in more detail under reference to the accompanying figures, in which:
Figure 1 illustrates a software program using two different function calls;
Figure 2 shows different configurations of function calls and AFUs;
Figures 3A and 3B demonstrate a further embodiment of a software program having two different function calls; and
Figure 4 shows an embodiment using a generic function call.

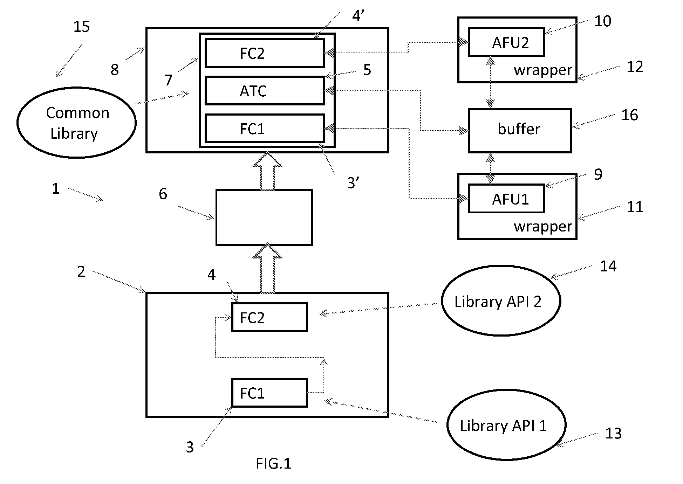

Figure 1 illustrates a schematic overview of an implementation 1 of framework according to the invention comprising a user program 2 having two function calls FC1 3 and FC2 4. User program 1 is compiled by compiler 6 into a code 7 in a common language. This code can be executed by an application vitual machine (AVM) 8.

During run-time, the execution module of the framework enables a conversion between the data structures of the data at the output of FC1 3 and the input of FC2 4 by means of an automatic type converter (ATC) 5.

The desired functionality of user program 1 is captured by FC1 3 and FC2 4. These units invoke AFU1 9 and AFU2 10, respectively. The AFUs can be accessed from the common language code 7 during run-time by means of suitable wrappers 11, 12. In figure 1, AFU1 9 is a functional unit inside CUDA which itself is written in a language that may not be supported by the framework. Still, the AFU may be accessed from within the framework through invocation of an associated compiled library, such as a dynamic link library. Alternatively, the CUDA.net wrapper 11 could be used to implement the same functionality. Similarly, AFU2 10 is a functional unit in DirectX made accessible through invocation or alternatively written using the SlimDX wrapper library 12.

The software developer can construct a program by making use of the associated function calls FC1 3 and FC2 4. A user may select these function calls from libraries 13, 14 associated with the wrappers. Apart from these libraries, a user has access to a common library 15, e.g. the base class library BCL, which comprises various general functions accessible by each supported programming language. As shown in figure 1, ATC 5 itself may be part of such a common library.

In figure 1, software program 2 is constructed such that data in buffer 16 is operated on by AFU1 9, after which AFU2 10 should realize a further operation. Due to the different data structures used by AFU1 9 and AFU2 10, ATC 5 converts the data outputted by AFU1 9, which was called by means of function call 3', prior to invoking AFU2 10 by means of function call 4'. In most cases, this involves rearranging the data. It should be noted here that function calls 3' and 4' are the common language equivalents of function calls 3 and 4, respectively.

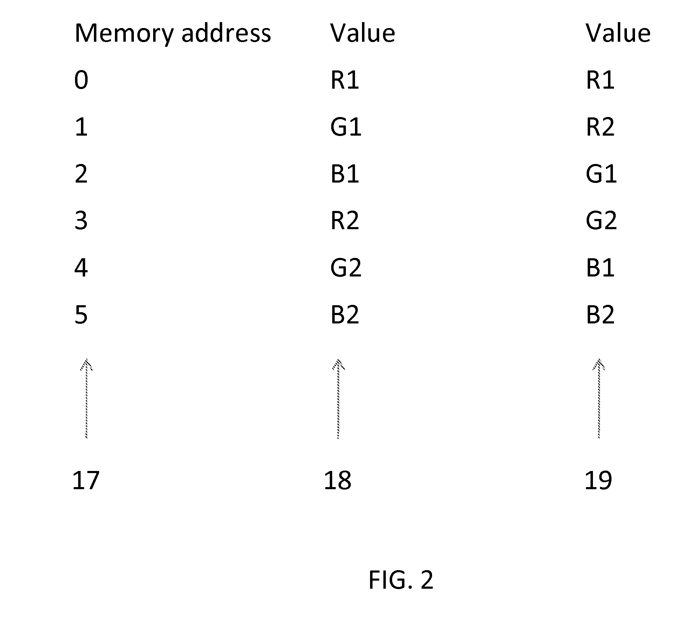

Figure 2 schematically illustrates how data can be arranged inside a buffer. This buffer represents an allocated region 17 in the memory of a computer. In figure 2, the buffer represents part of a RGB description of an image. The second column 18 shows a data arrangement on a pixel-by-pixel basis. For every pixel, values for the color components red (R), blue (B), and green (G) are stored consecutively. The third column 19 depicts a different arrangement based on a frame-by-frame basis. Here, all the color components for a given color are stored consecutively. Essentially, a red, green, and blue color frame is stored. The type converter according to the invention makes sure that the data is arranged according to the arrangement expected by the AFU which is to access the data next.

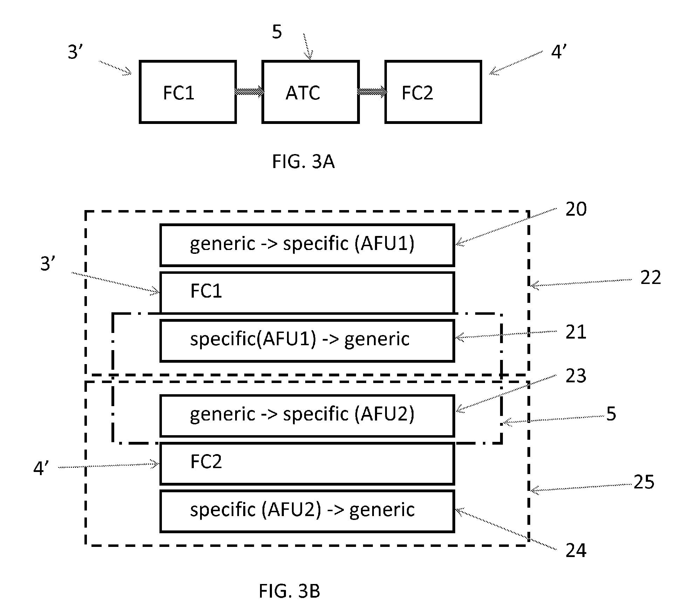

Figure 3A shows a schematic overview of the desired functionality of a further software program. Again, FC1 3' and FC2 4' are cascaded by means of type converter 5 at the level of the common language. However, in this case, a generic data structure is used. Both the starting data, i.e. the input data for FC2 4', and the output data, i.e. the output data of FC1 3', are arranged according to a predefined generic data structure.

Figure 3B shows a more detailed overview of the software program of figure 3A. First, data in the buffer which is arranged according to a generic data structure is converted to comply with the predefined data structure expected by AFU1 9 by means of intermediate converter 20. The output of FC1 3' is converted back to the generic data structure by means of intermediate converter 21. FC 4' can be connected to FC1 3 by repeating the previous steps, albeit adapted to cope with the different data structure needed for AFU2 10.

In figure 3B, type converter 5 comprises two intermediate converters 20, 21 to convert back and forth between the generic data structure. As a matter of definition, one could refer to the combination of FC1 3' and the two adjacent intermediate converters 20, 21 as a single function call 22. Such a function would allow a user to quickly assemble a program without having to worry about the data structure requirements of the underlying AFUs. For instance, wrappers 11, 12 or libraries 13, 14 could be modified to include these intermediate converters. Similarly, the combination of FC2 4' and the two adjacent intermediate converters 23, 24 can be considered as a single function call 25. On the other hand, the combination of the two inner intermediate converters 21, 23 can be considered to be the ATC 5.

Because of the availability of the ATC, a user can select from a plurality of function calls, which, although offered by different APIs, display similar functionality. Consequently, a user may optimize his program by selecting the appropriate API, for instance by optimizing the work load distribution between CPU and GPU. This aspect can also be implemented in execution module. In a further development, a user may select generic function calls which only describe the desired functionality, but which are associated with specific function calls that are linked to specific AFUs. During run-time, the execution module decides on the actual implementation of the generic function call. In other words, during run-time the generic function call description is replaced by an actual specific function call implementation. As previously mentioned, this replacement could involve the actual replacement of function calls at the level of the common language.

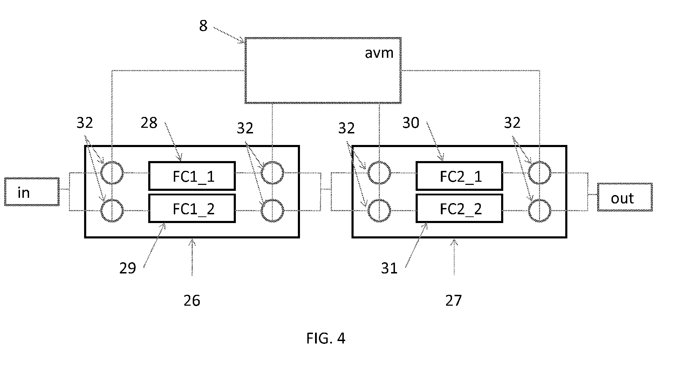

Figure 4 illustrates how a generic description of a function call can be implemented in the framework according to the invention. It should be noted that figure 4 is illustrated at the level of the common language. Generic function call 26 is represented as a parallel configuration of switchable implementations of specific function calls. For instance, generic FC 26 can be implemented by FC1_1 28 and FC1_2 29, which each are linked to different AFUs which could also be linked to different processing cores (CPU/GPU). Similarly, generic FC 27 is represented as a parallel configuration of FC2_1 30 and FC2_2 31.

During run-time, the execution module decides on the actual implementation. This is illustrated schematically by the switches 32 in figure 4 that are used to select between the different implementations. This switching between different implementations, the so-called "hot swapping" can be based on predictive analysis of the run-time performance of the program within the framework. It may additionally or alternatively be based on load statistics of the various processing cores (GPU/CPU) during run-time. For instance, the execution module may decide to implement a certain generic FC in a FC linked to the DirectX API instead of a CUDA implementation because the GPU load during run-time would prevent sufficient performance to be achieved. As such, the program becomes adaptive and is able to respond to differences in the computing environment such as changes in the load of a CPU due to other programs during run-time.

Although the invention has been described using embodiments thereof, it should be obvious to the skilled person that various modifications and variants are possible without departing from the scope of protection which is defined by the following claims.

The principles of the present invention can also be applied to systems that do not employ virtual machines. For instance, a software program may be developed in the C language whereas the APIs needed are constructed in the C++ language. In this case, suitable wrappers must be written to allow the AFUs to be called from within the C program. The execution module in this situation could be in the form of a dynamical-link library (dll) which would still offer the same functionality as previously discussed. Also in this situation, the execution module would take care of the automatic conversion between different data structures in case a specific AFU is called.

## Claims

1. Framework for the development of a software program comprising an execution module for managing a function call to a first API functional unit during run-time of the software program, wherein the first API functional unit is comprised by a first application programming interface (API) and is provided with an input accepting input data placed in a buffer, wherein the first API functional unit can be called by the function call from within the software program, and wherein the first API functional unit is arranged to work with a predefined data structure of the data in the buffer, said execution module comprising a type converter for automatically converting the input data to match said predefined data structure when the first API functional unit is called by said function call during run-time.

2. Framework according to claim 1, said framework being adapted to be executed on an application virtual machine, said application virtual machine being arranged for executing code that has been compiled by a compiler into a common language from at least one of a plurality of languages supported by the compiler and the application virtual machine, wherein the software program is in a supported language, and wherein said framework is available for each of said plurality of supported languages.

3. Framework according to claim 1 or 2, wherein the buffer is coupled to an allocated region of a memory of a computer.

4. Framework according to any of the previous claims, wherein the predefined data structure sets the type and location of the data in the buffer.

5. Framework according to any of the previous claims, wherein the type converter is adapted to either re-arrange the data already in the buffer, or to re-arrange the data prior to placing re-arranged data in the buffer.

6. Framework according to any of the previous claims, wherein said first API functional unit is provided with an output for outputting data operated on by the first API functional unit in a buffer, said software program further comprising a function call to a second API functional unit which is comprised by a second application programming interface, said second API functional unit having an input accepting data placed in a buffer, wherein the second API functional unit is arranged to work with a predefined data structure of the data in the buffer, wherein the type converter is further arranged to convert the data in the output buffer of the first API functional unit to match the data structure of the input buffer of the second API functional unit.

7. Framework according to claim 6, wherein the type converter comprisesa first and second intermediate converter, wherein:
- said first intermediate converter is arranged to convert data to match a predefined generic data structure;
- said second intermediate converter is arranged to convert data according to said predefined generic data structure to match said predefined data structure of the input and or output buffer.

8. Framework according to claim 7, wherein the first intermediate converter is arranged to store an output thereof in a separate buffer.

9. Framework according to any of the previous claims, wherein the execution module is part of a common library accessible from within the software program.

10. Framework according to any of the previous claims, wherein the type converter is arranged to first detect the data structure of the input and or output buffer and to then convert the data in accordance with the detected data structure.

11. Framework according to any of the previous claims, wherein at least one of the first and second application programming interfaces is an application programming interface for a graphical processing unit.

12. Framework according to any of the previous claims, wherein the framework is based on the .NET framework.

13. Framework according to any of the previous claims, wherein the first and or second application programming interface is one of the group consisting of CUDA.NET, OpenCV, DirectX, CUDA, CUDA.NET, Emgu.CV, and SlimDX.

14. Framework according to any of the previous claims, wherein the software program comprises a first and second function call which have identical functionality but which invoke a different API functional unit, wherein the execution module is arranged to switch between the first and second function call during run-time in accordance with predefined rules or determined performance statistics.

15. Execution module as defined in any of the previous claims.
